# EUROPEAN PATENT SPECIFICATION

(11) **EP 3 343 942 B1**
(45) Date of publication and mention of the grant of the patent: **05.06.2024**
(21) Application number: 15902930.5
(22) Date of filing: 28.08.2015
(51) Int. Cl.: H04R 1/02, B60R 11/02

(54) **SPEAKER SYSTEM FOR MOVING BODY AND MOVING BODY**
LAUTSPRECHERSYSTEM FÜR BEWEGLICHEN KÖRPER UND BEWEGLICHER KÖRPER
SYSTÈME DE HAUT-PARLEUR POUR UN CORPS MOBILE ET CORPS MOBILE

(43) Date of publication of application: 04.07.2018
(73) Proprietor: Pioneer Corporation, Tokyo 113-0021 (JP); Tohoku Pioneer Corporation, Tendo-shi, Yamagata 994-8585 (JP)
(72) Inventor: NEGISHI, Takayuki, Tendo-shi Yamagata 994-8585 (JP); UMETSU, Yasumi, Tendo-shi Yamagata 994-8585 (JP)
(74) Representative: Grünecker Patent- und Rechtsanwälte PartG mbB
(86) International application number: PCT/JP2015/074532
(87) International publication number: WO 2017/037807

(56) References cited:
- EP-A1- 1 113 703
- WO-A1-2014/006290
- DE-A1- 19 909 143
- JP-A- H07 267 003
- JP-A- 2005 311 908

## Description

### TECHNICAL FIELD

The present invention relates to a vehicle with a speaker system.

### BACKGROUND ART

There is conventionally proposed an on-vehicle speaker device (a speaker system for a mobile object) which is placed in an instrument panel and utilizes sound emitted from a back side (for example, see Patent Literature 1). In a conventional on-vehicle speaker device described in Patent Literature 1, a speaker is installed in an instrument panel with its front side set at an upper surface of the instrument panel and is accommodated in a cylindrical acoustic tube (a tubular member). Further, the speaker device is configured such that a component of a low sound range in the sound generated at the back side of the speaker resonates in the acoustic tube and is emitted from a lower surface of the instrument panel. WO 2014/006290 A1 shows a vehicle with a speaker system according to the preamble of claim 1. DE 199 09 143 A1 shows another vehicle with a speaker system.

### CITATION LIST

### Patent Literature

[Patent Document 1]: Japanese Unexamined Utility Model Application Publication No. H1-143595

### SUMMARY OF INVENTION

### Technical Problem

However, the on-vehicle speaker device described in Patent Literature 1 was not able to improve the acoustic characteristics of the low sound range sufficiently since sound emitted from the acoustic tube did not echo easily in a space in a vehicle.

The present invention deals with a problem like this as an example of the problem. That is, an object of the invention is to provide a vehicle with a speaker system, which is capable of improving the acoustic characteristics of the low sound range.

### Solution to Problem

In order to solve the problem and to achieve the object aforementioned, a vehicle with a speaker system is provided as in claim 1.

### BRIEF DESCRIPTION OF THE DRAWINGS

FIG. 1 is a side view illustrating a mobile object installed with a speaker system for a mobile object according to the present invention.
FIG. 2 is a side view illustrating a part of the mobile object illustrated in FIG. 1.
FIG. 3 is a cross-sectional view taken along line I-I of FIG. 2.

### DESCRIPTION OF EMBODIMENT

An embodiment of the present invention will be described below. A vehicle with a speaker system according to the embodiment of the present invention includes: a speaker unit emitting sound from the front side toward a box-shaped space formed by the vehicle having a vehicle body and a door installed on the vehicle body; an accommodating unit accommodating the back side of the speaker unit; and a tubular member having one end connected to an internal space of the accommodating unit, and the other end of the tubular member opens toward a gap between a lower end part of the door and a part of the vehicle body confronting the lower end part of the door.

Since the one end of the tubular member is connected to the internal space of the accommodating unit (a space to accommodate the speaker unit), a component of the low sound range corresponding to a length of the tubular member among sounds generated at the back side of the speaker unit resonates in the tubular member and is emitted from the other end. Note that the accommodating unit and the tubular member may be formed integrally. Further, since the other end of the tubular member opens toward the gap between a lower surface of the door and the part of the vehicle body, the component of the low sound range emitted from the other end is reflected on two surfaces of the lower surface of the door which forms the gap and a surface of the part of the vehicle body. Thus the component of the low sound range tends to echo in the space of the mobile object, and the acoustic characteristics such as sound pressure of the low sound range of the speaker system for the mobile object may be improved.

Further, the other end of the tubular member preferably opens toward the part of the vehicle body which forms the gap. Thus, the component of the low sound range emitted from the other end is reflected on the two surfaces of the lower surface of the door which forms the gap and the surface of the part of the vehicle body. Thus the component of the low sound range tends to echo in the space of the mobile object, and the acoustic characteristics such as sound pressure of the low sound range of the speaker system for the mobile object can be improved.

Further, a length of the gap in a vertical direction of the door is preferably formed as to get larger toward an inner side of the box-shaped space (for example, a location where a seat is installed). Thus, since the length of the gap in the vertical direction of the door increases toward the inner side of the box-shaped space, flair effect occurs. Then, it may result in reducing a wind noise or turbulence of the air flow. Further, the component of the low sound range emitted from the other end of the tubular member reflects on the two surfaces of the lower surface of the door which forms the gap and the surface of the part of the vehicle body and echoes easily in the space of mobile object and the acoustic characteristics such as sound pressure of the low sound range of the speaker system for the mobile object may be improved.

Further, it is preferable that the speaker unit is installed on the door in order to emit sound from the front side toward the space and also is installed above a seat surface of the seat mounted in the mobile object and that the tubular member is located inside the door and also extends in the vertical direction of the door. Since the speaker unit is installed above the seat surface of the seat mounted in the mobile object, it is possible for emitted sound (especially, a middle and high sound range) to reach a passenger easily. Further, the other end of the tubular member lies inside the door, resulting in extending to the lower part of the door, and thus it is possible to improve the acoustic characteristics such as sound pressure of the low sound range.

Since the mobile object according to the embodiment of the present invention is provided with the speaker system for the mobile object, and the one end of the tubular member is connected to the internal space of the accommodating unit (the space to accommodate the speaker unit), the component of the low sound range corresponding to the length of the tubular member among the sounds generated at the back side of the speaker unit resonates in the tubular member and is emitted from the other end. Note that the accommodating unit and the tubular member may be formed integrally. Further, since the other end of the tubular member is opening toward the gap between the lower surface of the door and the part of the vehicle body, the component of the low sound range emitted from the other end is reflected on the two surfaces of the lower surface of the door which forms the gap and the surface of the part of the vehicle body. Thus the component of the low sound range tends to echo in the space of the mobile object, and the acoustic characteristics such as sound pressure of the low sound range of the speaker system for the mobile object may be improved.

### EXAMPLE

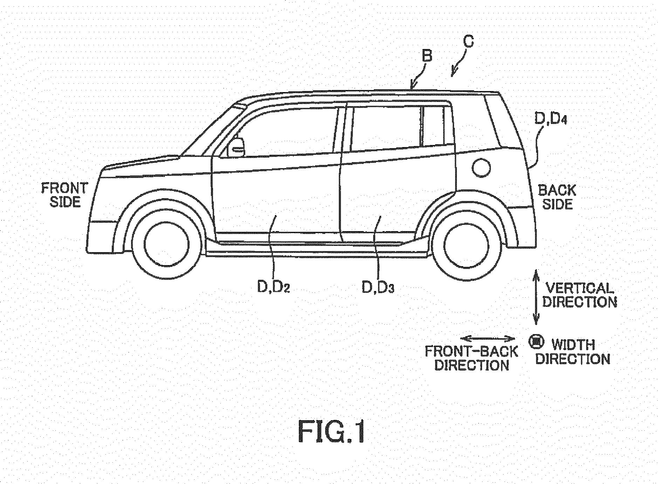

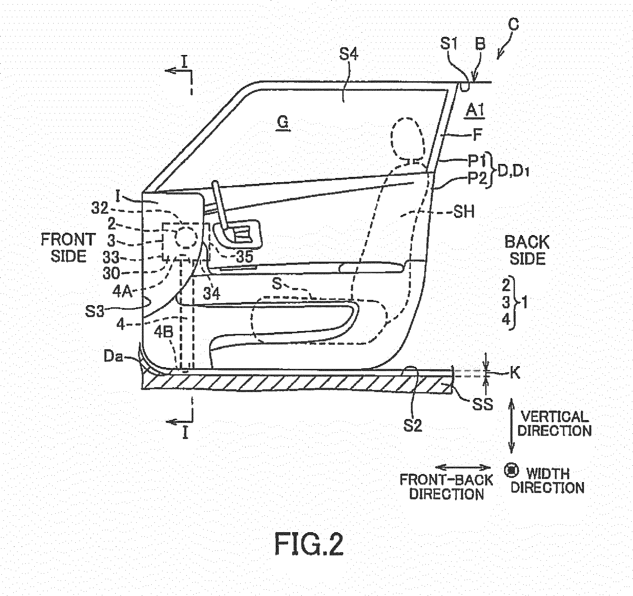

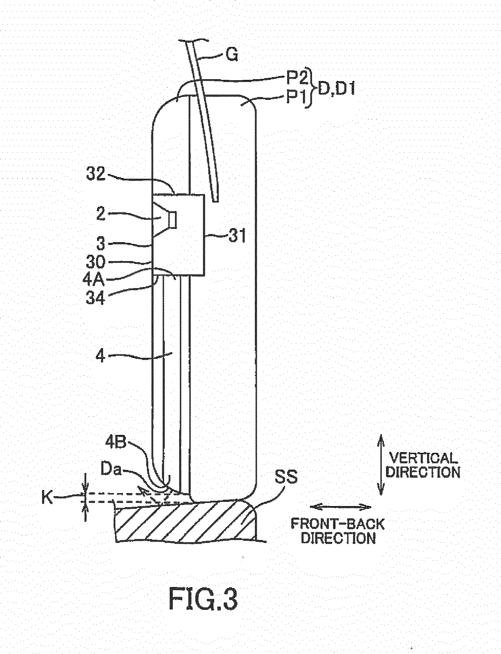

FIG. 1 is a side view illustrating a mobile object installed with a speaker system for a mobile object of the present invention. FIG. 2 is a side view illustrating a part of a mobile object illustrated in FIG. 1. FIG. 3 is a cross-sectional view taken along line I-I of FIG. 2.

A speaker system for a mobile object 1 includes, as illustrated in FIGS. 1 and 2, a speaker unit 2 installed in a vehicle C (a mobile object), an enclosure 3 (an accommodating unit) which accommodates the speaker unit 2, and a tubular member 4 connected to the enclosure 3.

The vehicle C forms a box-shaped room space of the vehicle A1 (a space) surrounded by a not-shown inner surface of a windshield, an upper surface (a top surface) S1 of an vehicle body B, a lower surface (a bottom face) S2, a front surface S3 which is located on the front side in a travelling direction of the vehicle C, a pair of side surfaces S4 (including a door body such as a vehicle door D) confronting each other in a width direction (a crosswise direction), and a back surface (not shown on the diagram) on the back side in the travelling direction of the vehicle C. Further, an instrument panel I is provided on the front surface S3, front seats (a driver's seat and a passenger seat) are provided confronting the back side of the instrument panel I, and back seats are provided on the back side of the front seats. Note that in FIG. 2, a seat on the passenger seat side is omitted, and the seat on the driver seat side is marked with "SH". In the present Example, as illustrated in FIGS. 1 and 2, the speaker system for the mobile object 1 is provided in a vehicle door D, D1 (as illustrated in FIG. 2) which is located in the width direction of the driver's seat, but it also may be provided in a vehicle door D, D2 (as illustrated in FIG. 1) on the passenger seat side, or it also may be provided in the both doors. Further, the speaker system for the mobile object 1 may be provided in a vehicle door D, D3 (as illustrated in FIG. 1) of the seat at the back side, and it also may be provided in a back door D, D4 (as illustrated in FIG. 1) confronting the front surface S3. In other words, the present invention may be applied to any vehicle door D on the vehicle C.

The vehicle C is configured to include the vehicle body B configuring a skeleton and the vehicle door D installed on a frame which is a part of the vehicle body B. Note that the vehicle body B may have a panel and the frame (a hollow frame), and a monocoque body and the like are mentioned for example. The vehicle door D is configured to include a metal outer panel P1 which is a vehicle exterior member and an inner panel P2 made of a synthetic resin which is a vehicle interior member. A window frame F is provided on the outer panel P1, and an opening of the window frame F is opened/closed by a lifting glass G. The inner panel P2 is provided overlapping the outer panel P1 with an upper end of the inner panel P2 joined to a lower end part of the window frame F. The frame is formed in a frame-like shape composed of an upper end, a lower end (a side sill SS), a front end, and a back end surrounding the vehicle door D. In the frame, a part which forms the lower end part is indicated as the side sill SS.

Here, in a state that the vehicle door D is closed (a state that the vehicle door D is covering an opening of the frame), there is a gap K which is a part of the room space of the vehicle A1 between a lower surface Da (the lower end of the vehicle door D) of the inner panel P2 of the vehicle door D and the side sill SS. A sound wave is emitted from the gap K to the room space of the vehicle A1. That is, a later-described other end 4B of the tubular member 4 is opening toward the gap K. Note that in the present Example, the other end 4B of the tubular member 4 is opening on the lower surface Da of the inner panel P2, but the present invention is not limited to this case. The other end of the tubular member may be opening on a lower surface of the outer panel P1.

There is the gap K between the lower surface Da of the inner panel P2 of the vehicle door D and the side sill SS, and the length of the gap K in the vertical direction of the vehicle door D is formed to become gradually larger as getting closer to the room space of the vehicle A1. In other words, the gap K is formed of a slope where a distance from the lower surface Da of the inner panel P2 to the side sill SS becomes larger as getting closer to the room space of the vehicle A1. Alternatively, the side sill SS may have a slope where the distance in the vertical direction from the lower surface Da of the inner panel P2 becomes larger as getting closer to the room space of the vehicle A1, or both parts which form the gap K may have the slope each. Thus the gap K is formed to become gradually larger as getting closer to the room space of the vehicle A1. That is, since the length of the gap in the vertical direction of the vehicle door D increases toward the inner side of the box-shaped room space of the vehicle A1, flair effect occurs and it may result in reducing a wind noise or turbulence of the air flow. Further, the component of the low sound range emitted from the other end 4B of the tubular member 4 reflects on the two surfaces of the lower surface Da of the vehicle door D which forms the gap K and the side sill SS of the vehicle body B and echoes easily in the room space of the vehicle A1 of the vehicle C and the acoustic characteristics such as sound pressure of the low sound range of the speaker system for the mobile object 1 is improved.

The speaker unit 2 is provided above and in front of the inner panel P2. That is, the speaker unit 2 is installed to be located above a seat surface S of the seat SH mounted in the vehicle C (the mobile object). This speaker unit 2 includes a vibration plate, a voice coil connected to the vibration plate, an edge which supports the vibration plate, a magnetic circuit which vibrates the voice coil, a frame which supports the edge and the magnetic circuit, and a damper which supports the voice coil supported by the vibration plate. The speaker unit 2 may emit the sound wave to make sound pressure of the middle and high sound range (for example, 1000 Hz to 10000 Hz) higher than that of the low sound range (for example, 10 Hz to 1000 Hz). Further, the vibration plate is provided with a side from which the speaker unit 2 emits the sound wave (the front surface S3) facing one side in the width direction (the driver's seat side or the passenger seat side) and also with the magnetic circuit side (the back side) facing the other side in the width direction. Further, the speaker unit 2 may be provided on the inner surface of the vehicle door D so that a vibration direction (a sound emission direction) of the vibration plate of the speaker unit 2 inclines at a predetermined degree (for example, 30 degrees) against the inner surface of the vehicle door D. The vibration direction (the sound emission direction) of the vibration plate of the speaker unit 2 against the inner surface of the vehicle door D may be set appropriately according to the distance between the speaker unit 2 and the seat SH or the like, and in such a case, a central axis or the vibration plate of the speaker unit 2 may not be inclined. Further, the central axis or the vibration plate of the speaker unit 2 may be set to face a headrest of the vehicle door D on which the speaker unit 2 is provided. Setting the speaker unit 2 in such a direction may make the sound wave (especially the middle and high sound range) emitted from the speaker unit 2 reach the passenger more easily.

The enclosure 3 is formed in a box-shape and is also provided in the inner panel P2 of the vehicle door D, on a top surface 30 of which the vibration plate is placed, and has the speaker unit 2 placed in the internal space thereof formed by the bottom surface 31 (as illustrated in FIG. 3) and four sides 32, 33, 34, and 35, and thus accommodating therein the back side of the speaker unit 2. The speaker unit 2 is accommodated in the enclosure 3 like this, thereby providing the speaker unit 2 in the inner panel P2 as to emit the sound wave from the front side on the inner surface of the room space of the vehicle A1 side of the inner panel P2. Further, the sound wave generated at the back side of the speaker unit 2 is emitted to the inner space of the enclosure 3.

As illustrated in FIG. 3, the tubular member 4 is formed in a cylindrical shape having both its ends opened, is made of an appropriate metal, resin or the like, and is extending downward in the inside of the inner panel P2 such that one end is linked to the side surface 34 located at the lower side of the enclosure 3 and also the other end 4B is opened at the lower surface Da of the inner panel P2. A shape of a section and a cross sectional area of the tubular member 4 is substantially constant from one end side to the other end 4B side, and is formed making its length have resonance frequency (for example, 30 Hz to 100 Hz). Since linkage of the one end of the tubular member 4 to the side surface 34 located at the lower side in the enclosure 3 allows for communicating with the internal space of the enclosure 3 at the one end. Further, the other end 4B is opening facing the side sill SS. Then, the tubular member 4 is provided to emit the sound wave from the gap K between the inner panel P2 and the side sill SS to the room space of the vehicle A1.

An advance and a reflection of the sound wave when the speaker unit 2 emits the sound wave in the above mentioned speaker system for the mobile object 1 will be described. First, the sound wave emitted from the front side of the speaker unit 2 advances to the diagonal rear side corresponding to an inclination of the vibration plate, and heads to the vicinity of the headrest of the driver's seat (the back side of the driver' s seat).

The sound wave generated at the back side of the speaker unit 2 echoes in the internal space of the enclosure 3, and along with that, enters the inside of the tubular member 4 from the one end 4A and advances to the other end 4B side in the tubular member 4. At this time, the component of the low sound range corresponding to the length of the tubular member 4 among the sound waves generated at the back side of the speaker unit 2 resonates in the tubular member 4. Therefore, the sound wave constituted mainly of the component of the low sound range is emitted from the other end 4B of the tubular member 4. In other words, the component of the middle and high sound range of the sound wave emitted from the other end 4B of the tubular member 4 has been cut. The sound wave emitted from the other end 4B is reflected on the lower surface Da of the inner panel P2 and the side sill SS which form the gap K and echoes in the room space of the vehicle A1 of the vehicle C.

The sound wave is emitted as mentioned above, thereby echoing in the room space of the vehicle A1 the sound wave having the component of the middle and high sound range emitted from the front side of the speaker unit 2 and the sound wave having the component of the low sound range emitted from the other end 4B of the tubular member 4.

According to the above mentioned configuration, since the other end 4B of the tubular member 4 is opening facing the side sill SS, a low pitched sound emitted from the other end 4B of the tubular member 4 reflects on two surfaces, that are the inner panel P2 and the side sill SS which form the gap K, and easily echoes in the room space of the vehicle A1, thereby improving the acoustic characteristics of the low sound range in the speaker system for the mobile object 1.

Further, in a case where the speaker unit 2 emits a sound wave such that the sound pressure of the middle and high sound range becomes higher than that of the low sound range, it is possible to reduce amplitude of the speaker unit 2, and thus it is also possible to inhibit an allophone from being generated that is resulted from a vibration transmitted to the vehicle body B. Further, as described above, the acoustic characteristics of the low sound range is improved, thereby obtaining the good acoustic characteristics even when a small speaker unit 2 in which sound pressure of the low sound range is low is utilized. Further, since sound pressure of a low sound emitted from the front side of the speaker unit 2 is relatively low, the sound wave emitted from the front side of the speaker unit 2 and the sound wave emitted from the other end 4B of the tubular member 4 do not weaken each other easily in the low sound range.

Note that the present invention is not limited to the aforementioned Example, but includes other configurations which can achieve the object of the invention, and the following modifications are also included in the invention,

Further, frequency-dependency of the sound wave emitted by the speaker unit 2 may be set appropriately. Even in a case where the sound pressure of the low sound range which the speaker unit 2 emits from the front surface S3 side is high, when sound pressure of the low sound which resonates in the tubular member 4 and is emitted from the other end 4B is high enough, the sound pressure of the low sound may be secured even when a sound wave from the front surface S3 side and a sound wave from the other end 4B interfere and weaken each other. That is, in a case where the sound pressure of low sound improves sufficiently by resonating in the tubular member 4, the speaker unit which emits a sound wave to keep the sound pressure from a low sound range to the middle and high range about the same, or the speaker unit which emits the sound wave to make the sound pressure of the low sound range higher than that of the middle and high range may be used, and also a speaker unit (a tweeter) for the middle and high range may be used. Further, a shape of the speaker unit is not specifically limited, and it may be a corn type or a dome type.

Although the best configuration and method for carrying out the present invention have been described above, the invention is not limited to them. That is, the invention is illustrated and described concerning the specific embodiment, but a person skilled in the art can variously modify the above-described embodiment in terms of shapes, materials, the numbers and other detailed configurations. Therefore, the descriptions to limit the above-disclosed shapes and materials are illustratively described to make it easy to understand the present invention, and they do not limit the invention. Thus, descriptions of names of members from which a portion or all of the limitations such as the shapes and the materials are removed are included in the invention, which is defined by the appended claims.

- 1: speaker system for mobile object
- 2: speaker unit
- 3: enclosure (accommodating unit)
- 4: tubular member
- 4A: one end
- 4B: other end
- A1: room space of vehicle (space)
- B: vehicle body
- C: vehicle (mobile object)
- D1: vehicle door (door)
- Da: lower end part of vehicle door
- K: gap
- SS: side sill (part of vehicle body)
- SH: seat
- S: seat surface

## Claims

1. A vehicle (C) with a speaker system comprising:
a speaker unit (2);
an accommodating unit (3) accommodating a back side of the speaker unit (2); and
a tubular member (4) having one end (4A) connected to an internal space of the accommodating unit (3), wherein
the speaker unit (2) is arranged so that the front side emitting sound faces a box-shaped space (A1) formed by the vehicle (C) having a vehicle body (B) and a door (D1) installed on the vehicle body (B) and a seat (SH), and
the other end (4B) of the tubular member (4) is arranged so as to be open toward a gap (K) between a lower end part of the door (Da) and a part of the vehicle body (B) opposed to the lower end part of the door (Da), **characterized in that**
the speaker unit (2) is installed above a seat surface (S) of the seat (SH) mounted in the vehicle (C), and a length of the tubular member (4) is determined so that a low sound range emitted from the speaker unit (2) resonates between the one end above the seat surface (S) and the other end, and **in that**
the gap (K) is formed as to get larger in a vertical direction of the door (D1) toward an inner side of the space.

2. The vehicle (C) according to claim 1,
wherein the other end (4B) of the tubular member (4) opens toward the part of the vehicle body (B) forming the gap (K).

3. The vehicle (C) according to claim 1,
wherein the speaker unit (2) is provided on the door (D1) in order to emit sound from the front side toward the space, and the tubular member (4) is located inside the door (D1).

## Patentansprüche

1. Fahrzeug (C) mit einem Lautsprechersystem, das umfasst:
eine Lautsprecher-Einheit (2);
eine Aufnahme-Einheit (3), die eine Rückseite der Lautsprecher-Einheit (2) aufnimmt; und
ein röhrenförmiges Element (4), dessen eines Ende (4A) mit einem Innenraum der Aufnahme-Einheit (3) verbunden ist, wobei
die Lautsprecher-Einheit (2) so angeordnet ist, dass die Schall emittierende Vorderseite einem kastenförmigen Raum (A1) zugewandt ist, der durch das Fahrzeug (C) mit einer Fahrzeugkarosserie (B) und einer an der Fahrzeugkarosserie (B) installierten Tür (D1) sowie einen Sitz (SH) gebildet wird, und
das andere Ende (4B) des röhrenförmigen Elementes (4) so angeordnet ist, dass es zu einem Spalt (K) zwischen einem unteren Endteil der Tür (Da) und einem dem unteren Endteil der Tür (Da) gegenüberliegenden Teil der Fahrzeugkarosserie (B) hin offen ist,
**dadurch gekennzeichnet, dass**
die Lautsprecher-Einheit (2) oberhalb einer Sitzfläche (S) des in dem Fahrzeug (C) montierten Sitzes (SH) installiert ist, und eine Länge des röhrenförmigen Elementes (4) so festgelegt ist, dass ein von der Lautsprecher-Einheit (2) emittierter Tieftonbereich zwischen dem einen Ende oberhalb der Sitzfläche (S) und dem anderen Ende in Resonanz ist,
und dadurch, dass
der Spalt (K) so ausgebildet ist, dass er in einer vertikalen Richtung der Tür (D1) zu einer Innenseite des Raumes hin größer wird.

2. Fahrzeug (C) nach Anspruch 1,
wobei das andere Ende (4B) des röhrenförmigen Elementes (4) sich zu dem Teil der Fahrzeugkarosserie (B) hin öffnet, der den Spalt (K) bildet.

3. Fahrzeug (C) nach Anspruch 1,
wobei die Lautsprecher-Einheit (2) an der Tür (D1) vorhanden ist, um Schall von der Vorderseite zu dem Raum hin zu emittieren, und sich das röhrenförmige Element (4) im Inneren der Tür (D1) befindet.

## Revendications

1. Véhicule (C) avec un système de haut-parleur comprenant :
une unité de haut-parleur (2) ;
une unité de réception (3) recevant un côté arrière de l'unité de haut-parleur (2) ; et
un élément tubulaire (4) ayant une extrémité (4A) reliée à un espace interne de l'unité de réception (3), dans lequel
l'unité de haut-parleur (2) est agencée de sorte que le côté avant émettant du son soit orienté vers un espace en forme de boîte (A1) formé par le véhicule (C) ayant une carrosserie de véhicule (B) et une porte (D1) installée sur la carrosserie de véhicule (B) et un siège (SH), et
l'autre extrémité (4B) de l'élément tubulaire (4) est agencée de manière à être ouverte vers un écart (K) entre une partie d'extrémité inférieure de la porte (Da) et une partie de la carrosserie de véhicule (B) opposée à la partie d'extrémité inférieure de la porte (Da), **caractérisé en ce que**
l'unité de haut-parleur (2) est installée au-dessus d'une surface de siège (S) du siège (SH) monté dans le véhicule (C), et une longueur de l'élément tubulaire (4) est déterminée de sorte qu'une faible plage sonore émise par l'unité de haut-parleur (2) résonne entre l'extrémité au-dessus de la surface de siège (S) et l'autre extrémité, et **en ce que**
l'écart (K) est formé de manière à s'agrandir dans une direction verticale de la porte (D1) vers un côté intérieur de l'espace.

2. Véhicule (C) selon la revendication 1,
dans lequel l'autre extrémité (4B) de l'élément tubulaire (4) s'ouvre vers la partie de la carrosserie de véhicule (B) formant l'écart (K).

3. Véhicule (C) selon la revendication 1,
dans lequel l'unité de haut-parleur (2) est prévue sur la porte (D1) afin d'émettre un son depuis le côté avant vers l'espace, et l'élément tubulaire (4) est situé à l'intérieur de la porte (D1).
